(19) Europäisches Patentamt
European Patent Office
Office européen des brevets

(11) **EP 2 558 819 B1**

(12) **FASCICULE DE BREVET EUROPEEN**

(45) Date de publication et mention
de la délivrance du brevet:
**16.07.2014 Bulletin 2014/29**

(21) Numéro de dépôt: **11723494.8**

(22) Date de dépôt: **18.04.2011**

(51) Int Cl.:
***G01C 19/56*** *(2012.01)*

(86) Numéro de dépôt international:
**PCT/FR2011/050890**

(87) Numéro de publication internationale:
**WO 2011/128605 (20.10.2011 Gazette 2011/42)**

(54) **MESURE GYROSCOPIQUE DANS UN SYSTEME DE NAVIGATION**

KREISELGESTÜTZTE MESSUNG IN EINEM NAVIGATIONSSYSTEM

GYROSCOPIC MEASUREMENT IN A NAVIGATION SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.04.2010 FR 1001628**

(43) Date de publication de la demande:
**20.02.2013 Bulletin 2013/08**

(73) Titulaire: **SAGEM DEFENSE SECURITE
92100 Boulogne-Billancourt (FR)**

(72) Inventeurs:
• **LIGNON, Christian
F-75015 Paris (FR)**
• **FOLOPPE, Yannick
F-75015 Paris (FR)**

(74) Mandataire: **Cabinet Plasseraud
52, rue de la Victoire
75440 Paris Cedex 09 (FR)**

(56) Documents cités:
**EP-A1- 1 491 856    EP-A2- 1 571 417
FR-A1- 2 904 870**

## Description

La présente invention est relative aux gyroscopes vibrants dont le principe repose sur l'effet de Coriolis et elle est plus particulièrement relative à la précision des mesures fournies par ce type de gyroscope.

De tels gyroscopes vibrants sont classiquement utilisés dans des systèmes inertiels destinés à la navigation, comme cela est le cas par exemple pour un compas gyroscopique qui est adapté pour fournir une mesure d'angle par rapport à une direction de référence qui est celle du Nord géographique (Cap).

Les gyroscopes de type Coriolis Vibratory Gyroscopes (CVG) axisymétriques, par exemple de type Hemispherical Résonance Gyroscopes (HRG ou GRH) ou plus généralement dits de type I, tels que ceux décrits dans le document 'Type I und Type II micromachined vibratory gyroscopes' de Andrei M. Shkel, pages 586-593, IEEE/ION (pour 'Institute of Electrical and Electronics Engineer/ Institute Of Navigation' PLANS 2006, San Diego, CA, USA), fonctionnent en boucle ouverte et permettent de mesurer un angle de rotation absolu sur la base d'une mesure d'un angle représentant la position géométrique de vibration du gyroscope par rapport à des électrodes de mesure.

Un tel gyroscope peut aussi être utilisé en boucle fermée par le contrôle de la position géométrique de vibration via une commande de précession comme cela est décrit notamment dans le document FR 2 755 227.

Dans ce cas, la position géométrique de vibration du gyroscope est maintenue dans une position fixe, et la mesure est déduite à partir de la commande qu'il est nécessaire d'appliquer au gyroscope pour le maintenir dans cette position géométrique de vibration fixe. Ce type de fonctionnement est également appelé 'bouclage en gyromètre'. Les valeurs fournies par la mesure physique ne correspondent plus alors à un angle mais à une vitesse de rotation.

Qu'ils soient utilisés en boucle ouverte ou en boucle fermée, les mesures fournies par ces gyroscopes vibrants peuvent être entachées d'erreurs qui sont notamment fonction de la position de la vibration par rapport aux électrodes de mesure. Ces erreurs sont donc variables en fonction de la position géométrique de vibration, et ont pour effet de dégrader le niveau de précision des valeurs ainsi mesurées. Il est donc utile de chercher à réduire ces erreurs afin d'améliorer les performances de ce type de gyroscope utilisé dans un système gyroscopique comprenant une pluralité de gyroscopes de ce type. Le document EP1571417 présente un gyroscope vibrant où la mesure est effectuée en utilisant deux positions de vibration distinctes pour compenser des erreurs de fabrication et d'électronique.

La présente invention vient améliorer la situation.

Un premier aspect de la présente invention propose un procédé de mesures gyroscopiques fournies par un système gyroscopique comprenant au moins trois gyroscopes vibrants ;
chacun desdits gyroscopes vibrant dans une première position géométrique de vibration initiale et fournissant un signal de mesure ;
dans lequel on applique à chacun desdits gyroscopes vibrants un signal de commande périodique, sur une période de temps, adapté :

- pour faire tourner la position géométrique de vibration dans un premier sens, pendant une première partie de la période de temps, provoquant un changement, selon un premier profil de vitesse, de la position de la vibration dudit gyroscope depuis la première position géométrique de vibration jusqu'à une seconde position géométrique de vibration ; et
- pour faire tourner la position géométrique de vibration dans un second sens opposé au premier sens, pendant l'autre partie de la période de temps, provoquant un changement, selon un second profil de vitesse, de la position de la vibration dudit gyroscope depuis la seconde position géométrique de vibration jusqu'à une troisième position géométrique de vibration ;
le signal de commande ayant une moyenne nulle sur la période de temps, et les premier et second profils de vitesse indiquant une variation de vitesse du changement de position géométrique de vibration en fonction du temps ; et

dans lequel les mesures fournies par le système gyroscopique sont basées sur des signaux corrigés ;
chacun desdits signaux corrigés, respectivement pour chacun des gyroscopes vibrants, représentant une variation de valeurs de position géométrique de vibration et étant obtenu par :

- retranchement du signal de commande au signal de mesure fourni par ledit gyroscope vibrant ; et
- prise en compte d'erreurs identifiées sur la base d'une comparaison, d'une part, des mesures fournies par le système gyroscopique en fonction de la position de vibration avec, d'autre part, des mesures de référence.

Dans un mode de réalisation de la présente invention, un système gyroscopique comprend au moins trois gyroscopes vibrants, chacun fournissant un signal de mesure représentant une variation de sa position géométrique de vibration en fonction du temps. Un tel système peut correspondre à une centrale de navigation.

On entend par les termes 'mesures de référence', tout type de mesure qui puisse être fiable et permettre d'identifier les erreurs des mesures fournies par le système gyroscopique en comparaison avec des mesures du système.

On peut prévoir que les mesures de référence soient fournies par un quatrième gyroscope inclus dans le système gyroscopique considéré.

On peut également prévoir que le système gyroscopique de navigation comprend des accéléromètres, les mesures de référence étant alors fournies par des mesures de position et/ou de vitesse obtenues sur la base de mesures fournies par lesdits accéléromètres.

Lorsque le système est inclus dans une centrale de navigation à l'arrêt, ou tout au moins sensiblement immobile, cette information d'arrêt correspond aux mesures de référence et peut alors être fournie par les accéléromètres de la centrale. Ces conditions peuvent correspondre à une phase d'alignement de la centrale de navigation.

Puis, lorsque la centrale de navigation (ou plus précisément le porteur de la centrale) est en mouvement, il peut être aisément prévu de disposer d'un autre moyen de mesures gyroscopiques pour permettre une comparaison des mesures fournies par la centrale avec une référence, et ainsi en déduire des erreurs de mesure, afin de pourvoir les corriger. On obtient alors des mesures de la centrale de navigation qui sont précises et qui ne sont plus entachées des erreurs qui peuvent perturber les signaux de mesure respectivement fournis par les gyroscopes vibrants.

Dans ce contexte, on peut disposer d'une centrale de navigation relativement peu coûteuse (car fondée sur des gyroscopes vibrants), tout en offrant un niveau de fiabilité élevé.

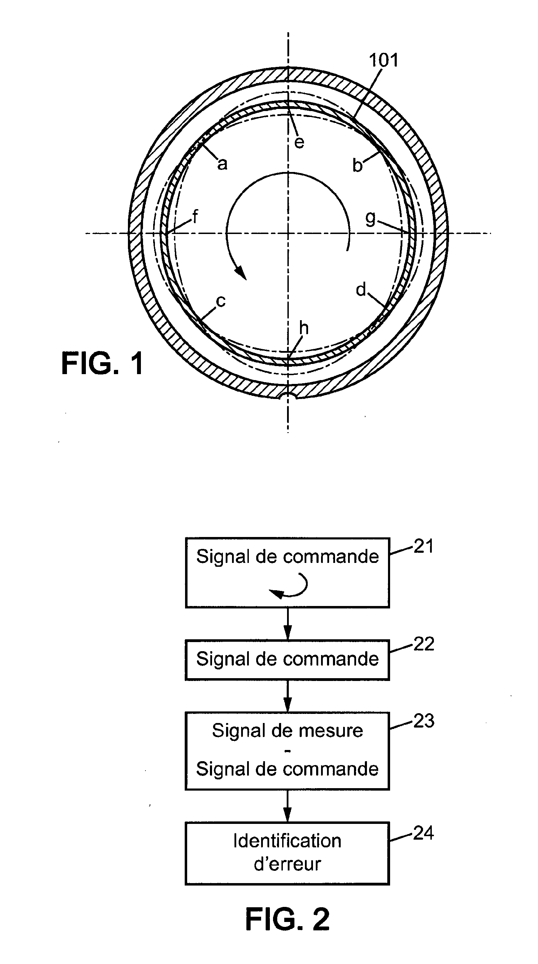

On entend par les termes 'position géométrique de vibration' d'un gyroscope, la position de l'onde stationnaire. La figure 1 illustre une telle onde stationnaire.

L'onde illustrée ici a quatre noeuds a, b, c, d et quatre ventres e, f, g, h autour de la périphérie d'un résonateur hémisphérique 101. Ces quatre ventres et quatre noeuds sont alternés et uniformément espacés de quarante-cinq degrés. Les noeuds sont des points sur l'onde stationnaire où le déplacement est minimal, et les ventres sont des points sur l'onde stationnaire où le déplacement est maximal. Le fonctionnement du gyroscope à résonateur hémisphérique exige un suivi précis du mouvement de l'onde stationnaire, qui exige à son tour que l'emplacement des noeuds et des ventres soit déterminé avec exactitude.

On peut faire tourner la position de cette onde stationnaire, ou encore la position géométrique de vibration d'un gyroscope de sorte que les noeuds et les ventres illustrés ne soient pas situés comme cela est illustrés, mais en décalage.

Avantageusement, dans un mode de réalisation, on prévoit d'appliquer à chacun des trois gyroscopes vibrants un signal de commande périodique, sur une période de temps, qui est adapté pour faire tourner la position géométrique de vibration du gyroscope, dans un premier sens, pendant une partie de la période de temps, et selon un premier profil de vitesse, puis dans un sens opposé selon un second profil de vitesse. Ainsi, le signal de mesure fourni par le gyroscope vibrant auquel est appliqué ce signal de commande est basé sur des mesures faites dans des positions géométriques de vibrations différentes, de telle sorte que les erreurs de mesure qui sont liées aux positions géométriques de vibration du gyroscope vibrant peuvent être annulées ou encore moyennées. En outre, il convient de retrancher de ce signal de mesure fourni par le gyroscope vibrant considéré le signal de commande périodique qui lui a été appliqué pour obtenir in fine des mesures gyroscopiques corrigées.

Il convient de noter que les signaux de commande appliqués aux trois gyroscopes vibrants peuvent être similaires ou encore différents.

Un tel signal de commande périodique peut correspondre, sur une période de temps, à un changement de la position géométrique de vibration dans un premier sens de la première à la seconde position géométrique de vibration, ce changement de position géométrique de vibration étant effectué selon le premier profil de vitesse, puis à un changement de la position géométrique de vibration dans un second sens de la seconde à une troisième position géométrique de vibration, ce changement de position étant effectué selon le second profil de vitesse. Chacun de ces profils de vitesse indique une variation en fonction du temps de la vitesse de rotation qui est appliquée à la position géométrique de vibration via le signal de commande selon un mode de réalisation de la présente invention.

On peut notamment prévoir que la troisième position corresponde sensiblement à la première position dans le cas le porteur sur lequel est fixé le système gyroscopique n'impose pas une rotation physique additionnelle au signal de commande sur le gyroscope vibrant considéré. Toutefois, la troisième position de vibration peut être différente de la première position dans le cas contraire.

En procédant ainsi, il est avantageusement possible de moyenner les erreurs respectives des différents gyroscopes vibrants. En effet, on applique aux trois gyroscopes vibrants du système des signaux de commandes périodiques respectifs ayant une moyenne nulle sur leur période. En outre, on identifie des erreurs en prenant en compte des mesures fournies par le système gyroscopique en sortie, en fonction de la position de vibration et du signal de commande. Ici, avantageusement, il est prévu de mettre en oeuvre une boucle de retour des mesures fournies en sortie par le système gyroscopique afin de les observer en fonction des variations de la position de vibration des gyroscopes vibrants du système et des variations du signal de commande. Grâce à cette voie de retour, chacun des signaux corrigés fourni par un des gyroscopes vibrants peut avantageusement être corrigé en outre sur la base des erreurs ainsi identifiées.

Cette boucle de retour permet de mettre en place une période d'observation et d'identification des erreurs des signaux de mesures fournies par chacun des gyroscopes vibrants du système en comparaison avec des mesures de référence.

Dans un mode de réalisation de la présente invention, les mesures de référence sont fournies par un signal de mesure externe.

Ainsi, on peut procéder à l'identification des erreurs sur la base d'une comparaison entre les mesures fournies par le système et les mesures de référence fournies par un système de mesure externe qui est alors utilisé en référence. Ce signal de mesure peut être un GPS par exemple (pour 'Global Positioning System' en anglais).

Dans un mode de réalisation, l'identification d'erreurs est déterminée, pour chacun des gyroscopes vibrants, sur la base d'un filtre de Kalman prenant en paramètres la position de vibration du gyroscope vibrant, le signal de commande, les mesures fournies par le système gyroscopique et les mesures de référence.

On peut également prévoir de mettre en oeuvre une méthode des moindres carrés afin d'identifier les erreurs selon un mode de réalisation de la présente invention.

Le système gyroscopique peut comprendre trois gyroscopes vibrants positionnés selon un trièdre, ce trièdre ayant une trisectrice orientée selon un axe sensiblement vertical.

On entend par les termes 'sensiblement vertical', le fait que la trisectrice ait une orientation qui soit essentiellement dirigée dans le sens de la verticale de telle sorte que les projections dans le plan horizontal des composantes de vitesse des mesures des gyroscopes fournissent une information pertinente et exploitable.

Dans ces conditions, avantageusement, les erreurs introduites dans les mesures fournies par les gyroscopes vibrants du système gyroscopique peuvent être identifiées de manière équivalente pour les trois gyroscopes vibrants du système gyroscopique. Plus précisément, en navigation, les composantes horizontales de vitesse sont celles qui sont les plus utiles à exploiter. En disposant le système gyroscopique comme indiqué ci-avant, il est avantageusement possible d'obtenir des composantes horizontales pour les trois gyroscopes vibrants de manière équivalente, par projection dans le plan horizontal des mesures fournies par chacun d'eux. Ainsi, l'identification des erreurs entachant les mesures fournies par chaque gyroscope vibrant peut être effectuée de manière pertinente en prenant en compte chacun des gyroscopes vibrants du système.

Dans un mode de réalisation de la présente invention, les premier et second profils de vitesse sont différents pour chacun des gyroscopes vibrants du système gyroscopique, les différences permettant que les erreurs associées aux mesures des trois gyroscopes soient décorrélées les unes des autres.

En prévoyant ainsi d'appliquer des signaux de commande différents respectivement aux différents gyroscopes vibrants, on peut avantageusement décorréler les erreurs qui entachent leurs signaux de mesure respectifs. Afin d'introduire des différences entre les signaux de commande permettant une telle décorellation des erreurs respectives des trois gyroscopes vibrants, on peut prévoir de moduler la période du signal de commande, ou encore période des cycles de précession, ou bien de déphaser les périodes des signaux de commande entre eux, c'est-à-dire déphaser les cycles de précession des trois gyroscopes vibrants entre eux.

Dans un mode de réalisation de la présente invention, le second profil de vitesse correspond à l'inverse du premier profil de vitesse en fonction du temps. Ainsi, le signal de commande appliqué est symétrique de part et d'autre du milieu de sa période de temps.

Dans un mode de réalisation, on peut prévoir que les première et seconde parties de période de temps sont identiques.

Dans un mode de réalisation, le signal de mesure du gyroscope et le signal de commande sont exprimés comme les mesures fournies par le système gyroscopique, c'est-à-dire soit en valeurs d'angle, soit en valeurs de vitesse angulaire. Dans ce dernier cas, avantageusement, il n'est pas nécessaire d'effectuer une intégration de signal avant de procéder à la soustraction du signal de commande au signal de mesure.

Grâce à ces dispositions, les mesures fournies par le système gyroscopique à un gyroscope vibrant peuvent avantageusement être basées sur un signal de mesure fourni par le gyroscope vibrant dont la position géométrique de vibration varie selon les premier et second profils de vitesse.

Les mesures fournies par le système gyroscopique peuvent correspondre à des valeurs de vitesse angulaire, chaque valeur de vitesse angulaire résultant de la division d'une différence entre deux valeurs de positions géométriques de vibration du signal corrigé séparées par un nombre entier de périodes de temps par une valeur de temps correspondant au nombre entier de périodes de temps.

Dans un mode de réalisation, avant de fournir des mesures du système gyroscopique, le signal périodique est appliqué pendant un intervalle de temps suffisamment long pour pouvoir considérer le signal de commande comme un signal haute fréquence par rapport au signal de mesure du gyroscope vibrant.

La période de temps et les premier et second profils de vitesse du signal de commande peuvent être déterminés de sorte que chaque intégrale de chacun des profils de vitesse est égal à $2\pi / kN$ radians, où N est un mode fréquentiel de vibration du gyroscope vibrant ;

où k est un nombre entier positif déterminé en fonction de l'ordre des erreurs à corriger.

Un second aspect de la présente invention propose un système de mesures gyroscopiques comprenant des moyens adaptés pour la mise en oeuvre d'un procédé de mesure selon le premier aspect de la présente invention.

D'autres caractéristiques et avantages de l'invention apparaîtront encore à la lecture de la description qui va suivre. Celle-ci est purement illustrative et doit être lue en regard des dessins annexés sur lesquels :

- la figure 1 illustre une position géométrique de vibration d'un gyroscope vibrant ;
- la figure 2 illustre les principales étapes d'un procédé de mesure par un système gyroscopique selon un mode de réalisation de la présente invention ;
- la figure 3 illustre une erreur résiduelle corrigée par une boucle de retour selon un mode de réalisation de la présente ;
- la figure 4 illustre une architecture d'un système gyroscopique selon un mode de réalisation de la présente invention ;
- la figure 5 illustre une configuration d'un système gyroscopique selon un mode de réalisation de la présente invention ;
- la figure 6 illustre une application de signaux de commande déphasés selon un mode de réalisation de la présente invention,
- la figure 7 illustre une application de signaux de commande modulés selon un mode de réalisation de la présente invention ;
- la figure 8 illustre des premier et second profils de vitesse en fonction du temps selon un mode de réalisation de la présente invention ;
- la figure 9 illustre une architecture d'un système gyroscopique selon un mode de réalisation de la présente invention ; et
- les figures 10 et 11 illustrent un signal de commande et son intégration selon un mode de réalisation de la présente invention.

De manière générale, les capteurs gyroscopiques vibrants axisymétriques présentent classiquement des erreurs qui dépendent de l'angle électrique de la vibration, ou encore position de vibration. Ces erreurs peuvent provenir d'un défaut de calibration ou bien d'un vieillissement du capteur. Une telle erreur peut s'exprimer sous la forme de l'équation suivante :

$$erreur = \sum_{n=1}^{\infty} a_n \sin(nN\theta) + b_n \cos(nN\theta)$$

où :

θ est une valeur de la position de vibration,
n est un nombre entier,
N est le mode fréquentiel de vibration du gyroscope vibrant

Si une centrale inertielle est constituée de trois accéléromètres et de trois gyroscopes vibrants axisymétriques, la précision de ses mesures est potentiellement affectée par ce type d'erreurs qui dépend notamment de la position de vibration, notamment dans la phase d'alignement de la centrale inertielle ou encore ultérieurement dans une phase de calcul de la position de cette centrale inertielle.

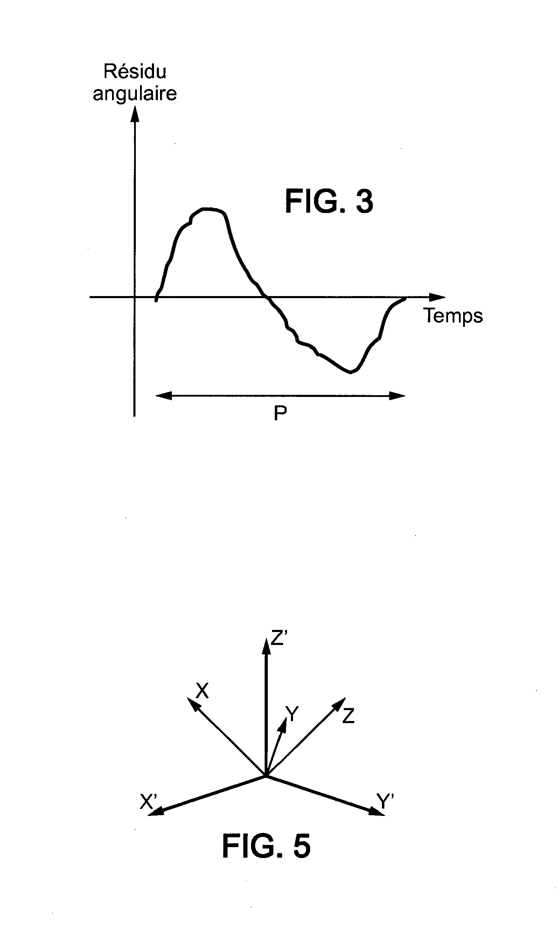

Il convient de noter que le fait de prévoir d'appliquer aux différents gyroscopes vibrants du système gyroscopique un signal de commande période de moyenne nulle sur sa période, c'est-à-dire appliquer une précession alternée à la position de vibration de chaque gyroscope vibrant considéré) permet déjà de moyenner ces erreurs. Mais la simple application d'un signal de commande de précession comme décrit ci-avant ne permet pas de réduire une certaine erreur résiduelle telle celle qui est illustrée sur la figure 3. La figure 3 illustre une erreur résiduelle en ordonnée en fonction du temps en abscisse qui peut encore affecter le signal de mesure d'un gyroscope vibrant en précession alternée après avoir retranché le signal commande, sur une période P du signal de commande.

Ceci n'est pas gênant pour un appareil de type compas gyroscopique, puisqu'un tel appareil utilise l'information gyroscopique d'un gyroscope vibrant de manière moyennée sur quelques heures. Toutefois, tel n'est pas le cas lorsque les gyroscopes vibrants sont utilisés dans une centrale inertielle de navigation. En effet, dans le contexte d'une centrale de navigation il est important de pouvoir compenser des erreurs gyroscopiques qui pourraient perturber fortement à la fois la phase d'alignement et les phases ultérieures de la navigation.

La figure 2 illustre les principales étapes d'un procédé de mesure selon un mode de réalisation de la présente invention pour un gyroscope vibrant du système gyroscopique. On peut aisément en déduire que l'application du même type d'étapes aux autres gyroscopes vibrants du système gyroscopique, même si les signaux de commande respectifs peuvent être différents pour les différents gyroscopes.

A une étape 21, on applique un signal de commande périodique adapté pour faire tourner la position géométrique de vibration dans un premier sens, pendant une partie de la période du signal de commande périodique. Sous ce signal de commande, la position géométrique de vibration du gyroscope vibrant tourne à une vitesse, qui peut varier en fonction du temps selon un premier profil déterminé, dans un premier sens. Ainsi, le gyroscope vibrant passe d'une première position géométrique de vibration à une seconde position géométrique de vibration. Ce premier profil de vitesse peut également correspondre à une vitesse constante, auquel cas, la position géométrique de vibration varie alors de manière continue sur la partie de période de temps considérée.

Puis, à une étape 22, on applique un signal de commande adapté pour faire tourner la position géométrique de vibration dans un second sens opposé au premier sens, pendant l'autre période de temps du signal de commande. Le signal de commande provoque ici un changement de la position de la vibration du gyroscope depuis la seconde position géométrique de vibration jusqu'à une troisième position géométrique de vibration, ce changement étant effectué selon une vitesse qui peut être variable en fonction du temps selon un second profil de vitesse. Le signal de commande a une moyenne de valeur nulle sur la période du signal de commande périodique.

Dans un mode de réalisation, le second profil de vitesse correspond au premier profil de vitesse inversé en fonction du temps. Ainsi, les premier et second profils de vitesse sont symétriques l'un par rapport à l'autre par rapport au centre de la période de temps.

Le gyroscope vibrant se trouve donc ensuite dans une troisième position géométrique qui peut correspondre à la position de vibration initiale, c'est-à-dire la première position géométrique de vibration après l'étape 22, notamment dans le cas où le gyroscope ne subit que le signal de commande selon un mode de réalisation de la présente invention.

Il convient de noter que dans un mode de réalisation de la présente invention, les premier et second profils de vitesse indiquent une vitesse constante en fonction du temps, avec une variation nulle de ce fait, c'est-à-dire que la position de la vibration tourne à vitesse constante à la fois dans le premier sens et dans le second sens.

Ce signal de commande est donc un signal de précession périodique adapté pour appliquer une précession alternée au gyroscope vibrant considéré dans le système gyroscope selon un mode de réalisation de la présente invention.

Puis, on répète les étapes 21 et 22 de sorte à disposer de mesures du gyroscope vibrant considéré sur une certaine période de temps, alors que ce dernier est en cours de précession.

Dans un tel contexte, on peut avantageusement disposer d'un signal de mesure du gyroscope vibrant pour des positions géométriques de vibration différentes. Il suffit ensuite de retrancher, au signal de mesure du gyroscope vibrant, le signal de commande appliqué au gyroscope vibrant pour obtenir un signal partiellement corrigé à une étape 23. Par signal de commande, on peut ici entendre un signal indiquant une variation de valeurs d'angle en fonction du temps. Dans ce cas, lorsque le signal de mesure du gyroscope correspond à des valeurs d'angles la soustraction entre les signaux peut être effectuée directement, et lorsque le signal de mesure correspond à des valeurs de vitesse angulaire, alors il est prévu de déterminer l'intégrale du signal de commande afin d'obtenir le signal de commande sous la forme de valeurs d'angle et de pouvoir le soustraire au signal de mesure.

Il est ensuite prévu que chacun des signaux corrigés obtenus pour chacun des gyroscopes vibrants du système gyroscopique prenne en outre en compte une identification d'erreurs effectuée à une étape 24 sur la base d'une comparaison, d'une part, des mesures fournies par le système gyroscopique en fonction de la position de vibration avec, d'autre part, des mesures de référence.

Ici, le signal fourni en sortie du système gyroscopique est pris en compte par une boucle de retour au niveau d'une phase d'identification d'erreur des mesures fournies par les gyroscopes vibrants. En comparant ainsi le signal sortant du système gyroscopique avec un signal de référence, on peut identifier les erreurs résiduelles du type de celle qui est illustrée en figure 3, de sorte à pouvoir les prendre en compte dans le signal corrigé en les compensant de manière fiable et pertinente. Un tel procédé permet d'obtenir une centrale inertielle fondée sur des gyroscopes vibrants, permettant ainsi de réduire les coûts, et qui, malgré tout, est capable de fournir des mesures fiables en sortie à la fois dans une phase d'alignement et dans des phases ultérieures de mesures effectuées au cours d'une utilisation sur un porteur en mouvement.

Les mesures fournies par le système gyroscopique peuvent alors être basées sur les signaux corrigés qui représentent respectivement des variations de valeurs de position géométrique de vibration des gyroscopes vibrants, après avoir retranché des signaux de commande au signal de mesure fourni par le gyroscope pendant la mise en oeuvre des étapes 21 et 22 et après avoir compensé les erreurs dites 'résiduelles' identifiées aux étapes 24 sur la base d'une comparaison des mesures fourni en sortie de la centrale inertielle avec des mesures de référence.

Dans un mode de réalisation de la présente invention, un système gyroscopique comprend :

- trois gyroscopes vibrants 402, chacun desdits gyroscopes vibrant dans une première position géométrique de vibration initiale et fournissant un signal de mesure ;
- une unité de commande 430 adaptée pour appliquer un signal de commande périodique, sur une période de temps, adapté :

  ∘ pour faire tourner la position géométrique de vibration dans un premier sens, pendant une partie de la période de temps, provoquant un changement, selon un premier profil de vitesse, de la position de la vibration dudit gyroscope depuis la première position géométrique de vibration jusqu'à une seconde position géométrique de vibration ; et

∘ pour faire tourner la position géométrique de vibration dans un second sens opposé au premier sens, pendant l'autre partie de la période de temps, provoquant un changement, selon un second profil de vitesse, de la position de la vibration dudit gyroscope depuis la seconde position géométrique de vibration jusqu'à une troisième position géométrique de vibration,

ledit signal de commande ayant une moyenne nulle sur ladite période de temps, et les premier et second profils de vitesse indiquant une variation de vitesse du changement de position géométrique de vibration en fonction du temps ; et

une unité de traitement 450 adaptée pour fournir, pour chacun des trois gyroscopes vibrants, un signal corrigé représentant une variation de valeurs de position géométrique de vibration et étant obtenu par :

- retranchement 409 du signal de commande au signal de mesure fourni par ledit gyroscope vibrant ; et
- prise en compte d'erreurs identifiées 410 sur la base d'une comparaison, d'une part, des mesures 406 fournies par le système gyroscopique en fonction de la position de vibration avec, d'autre part, des mesures de référence.

dans lequel les mesures fournies par le système gyroscopique sont basées sur les signaux corrigés.

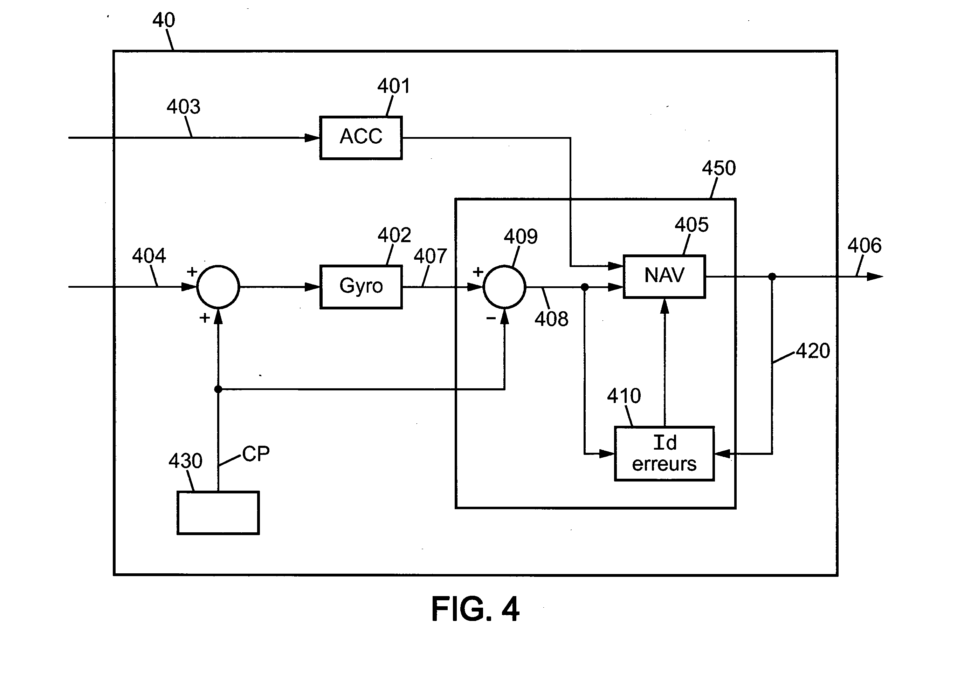

La figure 4 illustre une architecture d'un système gyroscopique selon un mode de réalisation de la présente invention.

Un tel système gyroscopique 40 comprend plus précisément trois accéléromètres 401 ainsi que trois gyroscopes vibrants 402 selon un mode de réalisation de la présente invention. Dans ce système gyroscopique 40 ici schématisé, il est prévu de mesurer une accélération 403 par les accéléromètres 401 et une vitesse de rotation 404 par les gyroscopes vibrants 402.

Une entité de navigation NAV 405 est en charge de traiter les signaux de mesure des accéléromètres et ceux des gyroscopes vibrants pour, in fine, fournir en sortie 406 des mesures inertielles telles qu'une valeur d'attitude, une valeur de position et une valeur de vitesse.

Dans un mode de réalisation de la présente invention, il est prévu d'appliquer un signal de commande CP (CP pour 'Commande de Précession') en plus de la vitesse de rotation que subit chaque gyroscope vibrant du système. Par conséquent, il convient de noter ici que chaque gyroscope vibrant du système fournit un signal de mesure 407 qui représente à la fois la vitesse de rotation qu'il subit au sein du système (liée au mouvement du porteur) et la commande de précession CP ou encore signal de commande appliqué selon un mode de réalisation.

A chacun de ces signaux de mesure 407 fourni par un gyroscope vibrant du système, il est prévu de retrancher le signal de commande qui lui a été appliqué CP par un soustracteur 409. On obtient ensuite un signal 408, qui peut être considéré comme partiellement corrigé au sens de la présente invention. Puis, à ce stade il est ensuite prévu de corriger ce signal 408 à l'aide d'erreurs identifiées selon la présente invention au niveau d'une unité d'identification d'erreurs 410. Cette correction d'erreurs identifiées peut être mise en oeuvre à différent niveau de la chaine de traitement schématisée à la figure 4. On peut par exemple prévoir de corriger le signal 408 au sein même de l'entité de navigation NAV 405 en charge de fournir les mesures du système gyroscopique. Cette option est celle illustrée en figure 4. Dans ce cas, l'unité de traitement 450 comprend à la fois le soustracteur 49, l'unité d'identificateur d'erreurs 41 et une partie au moins de l'unité de navigation 45, au niveau de laquelle les signaux corrigés sont obtenus et utilisés pour fournir les mesures de sortie du système dans ce mode de réalisation. En effet, dans cette option, les erreurs résiduelles identifiées au niveau de l'unité d'identification d'erreurs 410 sont fournies à l'unité de navigation.

Toutefois, on peut également envisager de corriger le signal 408 en amont de l'entité de navigation NAV 405 de sorte que le signal entrant dans cette entité pour chaque gyroscope vibrant soit déjà corrigé à la fois par retranchement du signal de commande CP et par prise en compte des erreurs résiduelles identifiées par l'unité d'identification 410. Dans ce cas, l'unité de traitement correspond alors au soustracteur 49, ainsi qu'unité d'indentification d'erreurs 410 et également à un module (non représenté) en amont de l'unité de navigation 45 qui reçoit la sortie de l'unité d'indentification 410 et la sortie du soustracteur 409 pour fournir à l'entité de navigation un signal corrigé pour chaque gyroscope au sens d'un mode de réalisation de la présente invention. L'unité de navigation 405 est alors en mesure de fournir un signal de mesure 406 qui est fiable.

Avantageusement, une voie de retour 420 permet de fournir les mesures 406 de sortie du système gyroscopique à l'unité d'identification des erreurs 410. Cette unité d'identification d'erreurs reçoit en outre le signal partiellement corrigé 408 du gyroscope vibrant considéré. Puis, cette unité d'identification d'erreurs 410 est en charge d'effectuer la comparaison de ces signaux afin de réduire les erreurs résiduelles selon un mode de réalisation de la présente invention.

La figure 5 illustre une disposition d'un système gyroscopique selon un mode de réalisation de la présente invention. Plus précisément, les axes X, Y et Z représentent les axes du trièdre des trois gyroscopes vibrants d'un système gyroscopique selon un mode de réalisation de la présente invention. La trisectrice de ce trièdre X, Y et Z est alors avantageusement orientée à la verticale, contrairement à l'autre trièdre X', Y' et Z' également représenté sur cette figure 5.

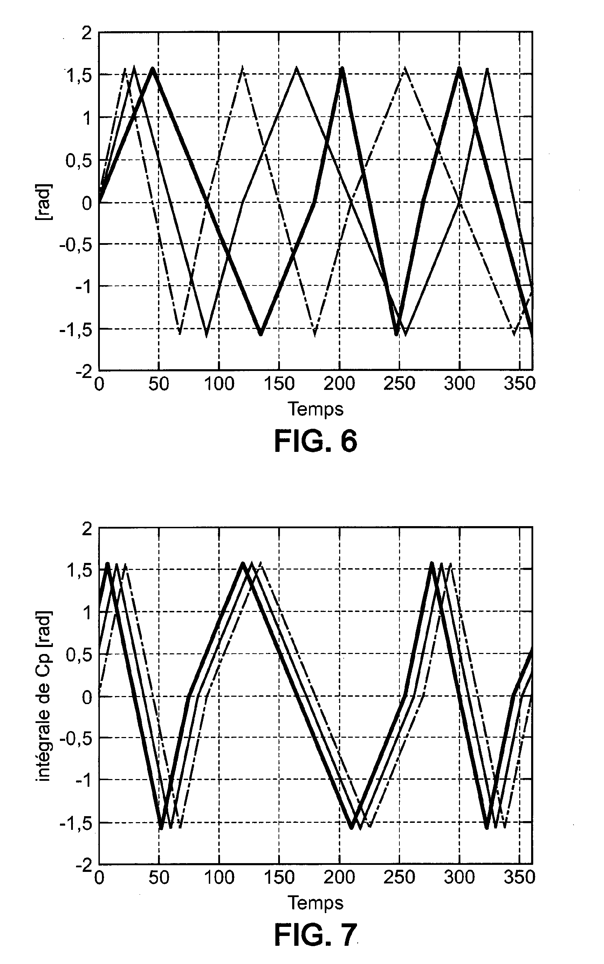

La figure 6 illustre une application de signaux de commande modulés selon un mode de réalisation de la présente invention. Une telle différence permet avantageusement de pouvoir décoreller entre elles les erreurs attachées respectivement aux signaux de mesure fournis par les gyroscopes vibrants.

La figure 7 illustre une application de signaux de commande appliqués déphasés selon un mode de réalisation de la présente invention. Dans ce mode de réalisation, les signaux de commande respectivement appliqués aux différents gyroscopes vibrants sont déphasés les uns des autres. Une telle différence permet également avantageusement de pouvoir décoreller entre elles les erreurs attachées respectivement aux signaux de mesure fournis par les gyroscopes vibrants.

Aucune limitation n'est attachée à la différence que l'on peut introduire entre les signaux de commande à appliquer aux gyroscopes vibrants pour être en mesure de séparer les erreurs attachées respectivement aux mesures fournies par les gyroscopes vibrants.

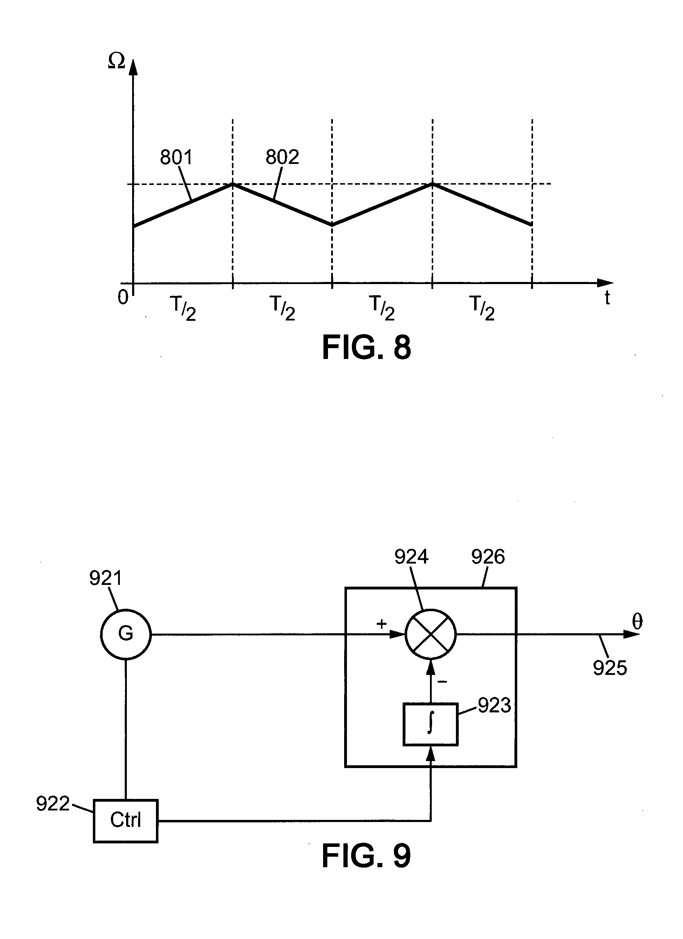

La figure 8 illustre des premier et second profils de vitesse selon un mode de réalisation de la présente invention. La figure 8 illustre le signal de commande en fonction du temps, c'est à dire la variation de la vitesse angulaire $\Omega$ en fonction du temps. Ici, la vitesse angulaire correspondant au signal de commande de changement de la position géométrique de vibration du gyroscope augmente de manière continue sur la première partie de la période du signal de commande et diminue, de la même manière qu'elle a augmentée, symétriquement, sur la seconde partie de la période du signal de commande. Ainsi, la partie 801 illustre le premier profil de vitesse et la partie 802 illustre le second profil de vitesse, ces deux profils de vitesse étant inversés temporairement l'un par rapport à l'autre.

Par la suite, à titre illustratif uniquement, les premier et second profils de vitesse indiquent une variation de vitesse nulle en fonction du temps, c'est-à-dire une valeur de vitesse constante.

La figure 9 illustre une architecture d'une partie d'un système gyroscopique comprenant des moyens adaptés pour la mise en oeuvre d'une partie du procédé de mesure selon un mode de réalisation de la présente invention. Plus précisément, les sections suivantes décrivent en détail l'obtention d'un signal corrigé par retranchement d'un signal de commande selon un mode de réalisation de la présente invention.

Un système gyroscopique selon un mode de réalisation comprend au moins un gyroscope vibrant 921 adapté pour recevoir et interpréter des signaux de commande reçus d'une unité de commande 922. Une telle unité de commande 922 est adaptée pour émettre des signaux de commande afin de contrôler un changement de position géométrique de vibration du gyroscope 921. Plus précisément, une telle unité de commande 922 génère un signal de commande pour faire tourner la position géométrique de vibration du gyroscope vibrant à une vitesse angulaire continue depuis une première position jusqu'à une seconde position géométrique de vibration.

Un tel système gyroscopique comprend en outre une unité de traitement 926 qui reçoit d'une part les signaux de commande depuis l'unité de commande 922 et d'autre part un signal de mesure du gyroscope 921.

L'unité de traitement 926 comprend une unité d'intégration 923 adaptée pour recevoir le signal de commande émis par l'unité de commande 922, qui indique des valeurs d'angle, et pour opérer une intégration de ces signaux de commande.

Cette unité de traitement 926 comprend en outre un soustracteur de signal 924 qui reçoit d'un côté le signal de mesure du gyroscope vibrant 921 et d'un autre côté le signal de commande intégré fournit par l'unité d'intégration 923, cette unité de traitement 926 fournissant en sortie 925 un signal corrigé.

Il convient de noter ici que le signal corrigé fourni en sortie de l'unité de traitement est entachée d'une erreur relative au facteur d'échelle. Par conséquent, un signal résiduel lié au signal de commande peut encore être présent dans le signal corrigé, et de ce fait peut réduire les performances des mesures gyroscopiques fournies par le système gyroscopique.

Afin de s'affranchir de cette erreur résiduelle relative au facteur d'échelle, on peut notamment prévoir d'appliquer le signal de commande sur un intervalle de temps assez long pour que le signal résiduel puisse être considéré comme un signal haute fréquence et être ainsi filtré. Dans ce cas, après cet intervalle de temps, on peut commencer à filtrer le signal corrigé. Puis, en continuant à appliquer le signal de commande périodique au gyroscope vibrant, on est en mesure de fournir des mesures gyroscopiques performantes sur une fenêtre de temps glissante correspondante au moins à cet intervalle de temps.

A cet effet, en sortie 925 du système gyroscopique illustré en figure 9, on peut prévoir d'inclure un filtre passe-bas.

Dans un mode de réalisation de la présente invention, on peut prévoir en sortie 925 un signal corrigé de valeur de vitesse angulaire, et non pas de valeur d'angle comme énoncé ci-avant. Dans ce contexte, l'unité d'intégration 923 n'est pas requise dans l'architecture si le signal de commande indique directement des valeurs d'angle.

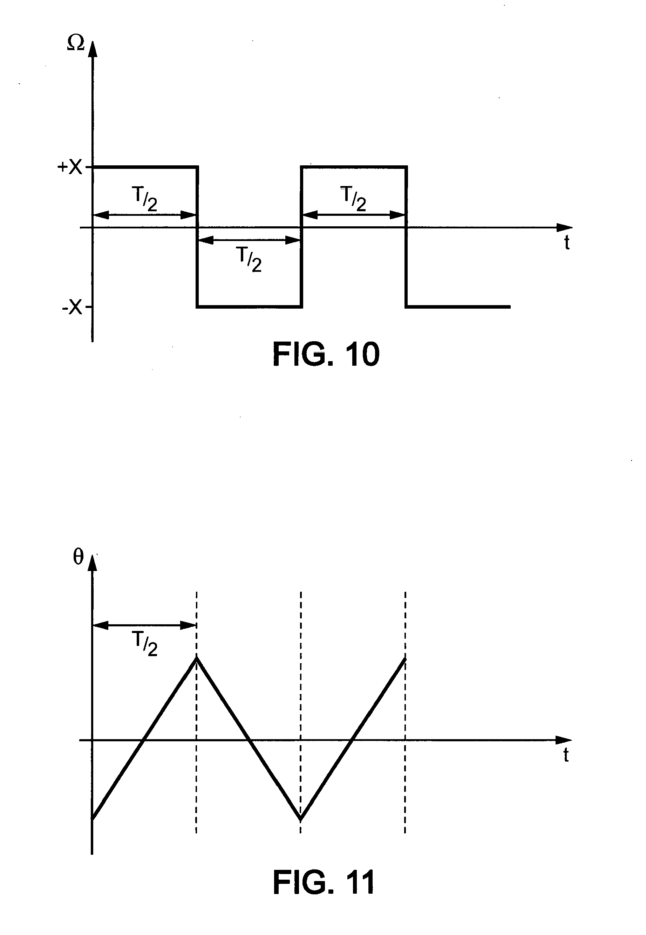

La figure 10 illustre un signal de commande selon un mode de réalisation de la présente invention. Ce signal est illustré dans un référentiel représentant le temps selon l'axe des abscisses et représentant la vitesse de rotation commandée à la position géométrique de vibration du gyroscope vibrant selon l'axe des ordonnées. Ici, le signal de commande est un signal rectangulaire représentant les variations de la vitesse de rotation appliquée au gyroscope vibrant en fonction du temps. En effet, il est ici prévu d'appliquer une vitesse de rotation $\Omega$ d'une valeur X et -X alternativement, respectivement sur des parties de période de temps T/2 consécutives. La vitesse de rotation est donc ici constante sur chacune des parties de période de temps T/2 et alternativement positive et négative sur deux parties de période de temps T/2 consécutives. On peut par exemple appliquer une valeur de vitesse de rotation $\Omega$ comprise entre 0.5 degrés par seconde et 20 degrés par seconde.

Il convient de noter ici que dans le mode de réalisation dans lequel un filtrage du signal de commande est effectué, plus la périodicité du signal de commande est courte, plus vite il est possible de fournir un signal corrigé et donc des mesures performantes du système gyroscopique.

Le signal de commande tel qu'illustré sur la figure 10 est fourni à la fois au gyroscope vibrant 921 et à l'entité de traitement 926.

Sur réception du signal de commande au niveau de l'entité de traitement 926, ce signal de commande, correspondant à la valeur de vitesse angulaire, est tout d'abord intégré. Ainsi, dans un mode de réalisation de la présente invention, l'intégration du signal de commande tel qu'illustré à la figure 10 est fournie en sortie de l'unité d'intégration 923 sous la forme d'un signal tel qu'illustré à la figure 11.

Ce signal est un signal triangulaire périodique de période 2T, représentant donc la variation de la position géométrique de vibration du gyroscope vibrant 921 en fonction du temps.

En commandant un changement uniforme de la position de la vibration sur une étendue angulaire de $2\pi/kN$ radians, on est en mesure de moyenner les erreurs du signal de mesure du gyroscope selon l'équation suivante, les erreurs pouvant s'écrire sous la forme $\sin(nN\theta)$ ou $\cos(nN\theta)$ :

$$\int_{\theta_0}^{\theta_0 + 2\pi/kN} (a_n \sin(nN\theta) + b_n \cos(nN\theta)).d\theta$$

où N est le mode fréquentiel de vibration du gyroscope vibrant ;
où k est un nombre entier positif ;
où n est un nombre entier correspondant à un ordre d'erreur à corriger ; et
où $\theta_0$ est une position géométrique de vibration initiale du gyroscope vibrant.

Il convient de noter que le nombre entier k peut être déterminé selon l'ordre des erreurs du signal de mesure du gyroscope vibrant que l'on souhaite corriger. Pour une valeur de k égale à 1 et un gyroscope vibrant pour lequel le mode fréquentiel est égal à 2 (c'est-à-dire N=2), on est en mesure de moyenner les erreurs de tout ordre qui sont relatives à la position géométrique de vibration du gyroscope.

Pour k égal à 1 et pour un gyroscope vibrant pour lequel le mode fréquentiel est égal à 2, c'est-à-dire pour lequel N égale à 2, on corrige les erreurs d'ordre n supérieur ou égal à 1 selon l'équation suivante :

$$\int_{\theta_0}^{\theta_0 + \pi} (a_n \sin(2n\theta) + b_n \cos(2n\theta)).d\theta$$

N, le mode fréquentiel de vibration d'un gyroscope vibrant peut par exemple être égal à 2, ou encore à 3 comme pour un gyroscope vibrant tel que celui décrit dans le document US7281426 par exemple.

On peut prévoir de retrancher le signal de commande résiduel, lié au facteur d'échelle, au signal de mesure en déterminant une différence entre une première valeur angulaire mesurée au début de la période du signal de commande et une seconde valeur angulaire mesurée à la fin de cette période, et en divisant cette différence par la valeur de la période.

On peut prévoir de prendre en considération deux positions géométriques de vibration occupées par le gyroscope vibrant à deux instants séparés d'une ou plusieurs périodes du signal de commande. Dans ce cas, on divise alors la différence entre les deux positions par le nombre de périodes qui séparent ces deux positions géométriques de vibration.

On fournit donc ici une valeur de vitesse angulaire. Avantageusement, cette valeur de vitesse angulaire est corrigée de l'erreur relative au facteur d'échelle.

**Revendications**

1. Procédé de mesures gyroscopiques fournies par un système gyroscopique de navigation comprenant au moins trois gyroscopes vibrants ; chacun desdits gyroscopes vibrant dans une première position géométrique de vibration initiale et fournissant un signal de mesure ;
   **caractérisé en ce que** on applique à chacun desdits gyroscopes vibrants un signal de commande périodique sur une période de temps, adapté :

   - pour faire tourner (21) la position géométrique de vibration dans un premier sens, pendant une partie de la période de temps, provocant un changement, selon un premier profil de vitesse, de la position de la vibration dudit gyroscope depuis la première position géométrique de vibration jusqu'à une seconde position géométrique de vibration ; et
   - pour faire tourner (22) la position géométrique de vibration dans un second sens opposé au premier sens, pendant l'autre partie de la période de temps, provocant un changement selon un second profil de vitesse, de la position de la vibration dudit gyroscope depuis la seconde position géométrique de vibration jusqu'à une troisième position géométrique de vibration ;
   ledit signal de commande ayant une moyenne nulle sur ladite période de temps, et les premier et second profils de vitesse indiquant une variation de vitesse du changement de position géométrique de vibration en fonction du temps ;

   dans lequel les mesures fournies par le système gyroscopique sont basées sur des signaux corrigés ;
   chacun desdits signaux corrigés, respectivement pour chacun des gyroscopes vibrants, représentant une variation de valeurs de position géométrique de vibration et étant obtenu par :

   - retranchement (23) du signal de commande au signal de mesure fourni par ledit gyroscope vibrant ; et
   - prise en compte d'erreurs identifiées (24) sur la base d'une comparaison, d'une part, des mesures fournies par le système gyroscopique en fonction de la position de vibration avec, d'autre part, des mesures de référence.

2. Procédé de mesures gyroscopiques selon la revendication 1, dans lequel les mesures de références sont fournies par un signal de mesure externe.

3. Procédé de mesures gyroscopiques selon la revendication 1 ou 2, dans lequel le système gyroscopique de navigation comprend un quatrième gyroscope, les mesures de référence étant fournies par ledit quatrième gyroscope.

4. Procédé de mesures gyroscopiques selon l'une quelconque des revendications 1 à 3, dans lequel le système gyroscopique de navigation comprend en outre des accéléromètres, les mesures de référence étant fournies par des mesures de position et/ou de vitesse obtenues sur la base de mesures fournies par lesdits accéléromètres.

5. Procédé de mesures gyroscopiques selon l'une des revendications précédentes, dans lequel l'identification d'erreurs est déterminée, pour chacun des gyroscopes vibrants, sur la base d'un filtre de Kalman prenant en paramètre la position de vibration du gyroscope vibrant, le signal de commande et les mesures de référence.

6. Procédé de mesures gyroscopiques selon l'une quelconque des revendications précédentes, dans lequel, le système gyroscopique comprend trois gyroscopes vibrants positionnés selon un trièdre ayant une trisectrice orientée selon un axe sensiblement vertical.

7. Procédé de mesures gyroscopiques selon l'une quelconque des revendications précédentes, dans lequel les premier et second profils de vitesse sont différents pour chacun des gyroscopes vibrants du système gyroscopique, les différences permettant que les erreurs associées aux mesures des trois gyroscopes soient décorrélées les unes des autres.

8. Procédé de mesure gyroscopique selon l'une quelconque des revendications précédentes, dans lequel les mesures fournies par le système gyroscopique correspondent à des valeurs de vitesse angulaire, chaque valeur de vitesse angulaire résultant de la division d'une différence entre deux valeurs de positions géométriques de vibration du signal corrigé séparées par un nombre entier de périodes de temps par une valeur de temps correspondant au nombre entier de périodes de temps.

9. Procédé de mesure gyroscopique selon l'une quelconque des revendications précédentes, dans lequel la période de temps et les premier et second profils de vitesse du signal de commande sont déterminés de sorte que chaque intégrale de chacun des profils de vitesse est égale à $2\pi\,l\,kN$ radians,

où N est un mode fréquentiel de vibration du gyroscope vibrant ;

où k est un nombre entier positif déterminé en fonction de l'ordre des erreurs à corriger.

10. Système gyroscopique comprenant :

   - trois gyroscopes vibrants (402), chacun desdits gyroscopes vibrant dans une première position géométrique de vibration initiale et fournissant un signal de mesure ; **caractérisé en ce qu'**il comprend :
   - une unité de commande (430) adaptée pour appliquer un signal de commande périodique, sur une période de temps, adapté :

      ∘ pour faire tourner la position géométrique de vibration dans un premier sens, pendant une partie de la période de temps, provoquant un changement, selon un premier profil de vitesse, de la position de la vibration dudit gyroscope depuis la première position géométrique de vibration jusqu'à une seconde position géométrique de vibration ; et
      ∘ pour faire tourner la position géométrique de vibration dans un second sens opposé au premier sens, pendant l'autre partie de la période de temps, provoquant un changement, selon un second profil de vitesse, de la position de la vibration dudit gyroscope depuis la seconde position géométrique de vibration jusqu'à une troisième position géométrique de vibration,
      ledit signal de commande ayant une moyenne nulle sur ladite période de temps, et les premier et second profils de vitesse indiquant une variation de vitesse du changement de position géométrique de vibration en fonction du temps ; et

   une unité de traitement (450) adaptée pour obtenir, pour chacun des trois gyroscopes vibrants, un signal corrigé représentant une variation de valeurs de position géométrique de vibration et étant obtenu par :

      - retranchement (409) du signal de commande au signal de mesure fourni par ledit gyroscope vibrant ; et
      - prise en compte d'erreurs identifiées (410) sur la base d'une comparaison, d'une part, des mesures fournies par le système gyroscopique en fonction de la position de vibration avec, d'autre part, des mesures de référence.

   dans lequel les mesures fournies par le système gyroscopique sont basées sur les signaux corrigés.

11. Système gyroscopique selon la revendication 10, dans lequel les mesures de référence sont fournies par un signal de mesure externe.

12. Système gyroscopique selon la revendication 10 ou 11, dans lequel le système gyroscopique de navigation comprend un quatrième gyroscope, les mesures de référence étant fournies par ledit quatrième gyroscope.

13. Système gyroscopique selon l'une quelconque des revendications 10 à 12, dans lequel le système gyroscopique de navigation comprend en outre des accéléromètres, les mesures de référence étant fournies par lesdits accéléromètres.

14. Système gyroscopique selon l'une des revendications 10 à 13, dans lequel l'identification d'erreurs est déterminée, pour chacun des gyroscopes vibrants, sur la base d'un filtre de Kalman prenant en paramètre la position de vibration du gyroscope vibrant, le signal de commande et les mesures de référence.

15. Système gyroscopique selon l'une quelconque des revendications 10 à 14, dans lequel l'identification d'erreurs est déterminée, pour chacun des gyroscopes vibrants, sur la base d'un filtre de Kalman prenant en paramètre la position de vibration du gyroscope vibrant, le signal de commande et les mesures fournies par le système gyroscopique.

16. Système gyroscopique selon l'une quelconque des revendications 10 à 15, comprenant trois gyroscopes vibrants positionnés selon un trièdre ayant une trisectrice orientée selon un axe sensiblement vertical.

17. Système gyroscopique selon l'une quelconque des revendications 10 à 16, dans lequel les premier et second profils de vitesse sont différents pour chacun des gyroscopes vibrants du système gyroscopique, de sorte que les erreurs associées aux mesures des trois gyroscopes soient décorrélées.

**Patentansprüche**

1. Verfahren für gyroskopische Messungen, die von einem gyroskopischen Navigationssystem geliefert werden, das mindestens drei vibrierende Gyroskope umfasst;

   wobei jedes der Gyroskope in einer ersten geometrischen Ausgangsvibrationsposition vibriert und ein Messsignal liefert;

   **dadurch gekennzeichnet, dass** jedem der Gyroskope ein periodisches Steuersignal über eine Zeitperiode zugeführt wird, das geeignet ist:

   - um die geometrische Vibrationsposition in eine erste Richtung während eines Abschnittes der Zeitperiode zu drehen (21), wodurch die Vibrationsposition des Gyroskops gemäß eines ersten Geschwindigkeitsprofils aus der ersten geometrischen Vibrationsposition in eine zweite geometrische Vibrationsposition geändert wird; und
   - um die geometrische Vibrationsposition in eine zweite Richtung, die der ersten Richtung entgegengesetzt ist, während des anderen Abschnittes der Zeitperiode zu drehen (22), wodurch sich die Vibrationsposition des Gyroskops gemäß eines zweiten Geschwindigkeitsprofils aus der zweiten geometrischen Vibrationsposition in eine dritte geometrische Vibrationsposition ändert;

   wobei das Steuersignal im Mittel über die Zeitperiode null ist und das erste Geschwindigkeitsprofil und das zweite Geschwindigkeitsprofil eine Geschwindigkeitsänderung der Änderung der geometrischen Vibrationsposition in Abhängigkeit von der Zeit angeben;
   wobei die Messungen, die von dem gyroskopischen System geliefert werden, auf korrigierten Signalen basieren;
   wobei jedes der korrigierten Signale jeweils für jedes der vibrierenden Gyroskope eine Änderung der Beträge der geometrischen Vibrationsposition darstellt und erhalten wird durch:

   - Abziehen (23) des Steuersignals vom Messsignal, das von dem vibrierenden Gyroskop geliefert wird;
   - Berücksichtigen der identifizierten Fehler (24) auf Grundlage eines Vergleichs der Messungen, die von dem gyroskopischen System in Abhängigkeit von der Vibrationsposition geliefert werden, einerseits mit Referenzmessungen andererseits.

2. Verfahren für gyroskopische Messungen nach Anspruch 1, **dadurch gekennzeichnet, dass** die Referenzmessungen von einem externen Messsignal geliefert werden.

3. Verfahren für gyroskopische Messungen nach Anspruch 1 oder 2, **dadurch gekennzeichnet, dass** das gyroskopische Navigationssystem ein viertes Gyroskop umfasst, wobei die Referenzmessungen von dem vierten Gyroskop geliefert werden.

4. Verfahren für gyroskopische Messungen nach einem beliebigen der Ansprüche 1-3, **dadurch gekennzeichnet, dass** das gyroskopische Navigationssystem ferner Beschleunigungssensoren umfasst, wobei die Referenzmessungen von Positions- und/oder Geschwindigkeitsmessungen geliefert werden, die auf Grundlage von Messungen erhalten werden, die von den Beschleunigungssensoren geliefert werden.

5. Verfahren für gyroskopische Messungen nach einem beliebigen der vorherigen Ansprüche, dadurch gezeichnet, dass die Identifizierung von Fehlern für jedes der vibrierenden Gyroskope auf Grundlage eines Kalman-Filters bestimmt wird, der als Parameter die Vibrationsposition des vibrierenden Gyroskops, das Steuersignal und die Referenzmessungen hat.

6. Verfahren für gyroskopische Messungen nach einem beliebigen der vorherigen Ansprüche, **dadurch gekennzeichnet, dass** das gyroskopische System drei vibrierende Gyroskope umfasst, die gemäß eines Trieders angeordnet sind, der eine Winkeldrittelnde hat, die entlang einer im Wesentlichen vertikalen Achse ausgerichtet ist.

7. Verfahren für gyroskopische Messungen nach einem beliebigen der vorherigen Ansprüche, **dadurch gekennzeichnet, dass** das erste Geschwindigkeitsprofil und das zweite Geschwindigkeitsprofil für jedes der vibrierenden Gyroskope des gyroskopischen Systems unterschiedlich sind, wobei die Unterschiede ermöglichen, dass die den drei Gyroskopen zugeordneten Fehler voneinander dekorreliert sind.

8. Verfahren für gyroskopische Messungen nach einem beliebigen der vorherigen Ansprüche, **dadurch gekennzeichnet, dass** die Messungen, die von dem gyroskopischen System geliefert werden, Winkelgeschwindigkeitswerten entsprechen, wobei sich jeder Winkelgeschwindigkeitswert aus der Division einer Differenz zwischen zwei geometrischen Vibrationspositionen des korrigierten Signals durch eine, die durch eine ganze Zahl von Zeitperioden voneinander getrennt sind, durch einen Zeitwert, der der ganzen Zahl der Zeitperioden entspricht, ergibt.

9. Verfahren für gyroskopische Messungen nach einem beliebigen der vorherigen Ansprüche, **dadurch gekennzeichnet, dass** die Zeitperiode und das erste Geschwindigkeitsprofil und das zweite Geschwindigkeitsprofil des Steuersignals derart bestimmt werden, dass jedes Integral jedes der Geschwindigkeitsprofile gleich $2\pi/kN$ Radianten ist, wobei N eine Schwingungsfrequenzmode des vibrierenden Gyroskops ist;
wobei k eine positive ganze Zahl ist, die in Abhängigkeit von der Ordnungszahl der zu korrigierenden Fehler bestimmt ist.

10. Gyroskopisches System umfassend:

   - drei vibrierende Gyroskope (402), wobei jedes der Gyroskope in einer ersten geometrischen Ausgangsvibrationsposition vibriert und ein Messsignal liefert; **dadurch gekennzeichnet, dass** es umfasst:
   - eine Steuereinheit (430), die ausgebildet ist, um ein periodisches Steuersignal über eine Zeitperiode auszusenden, das geeignet ist:

      ◦ um die geometrische Vibrationsposition in eine erste Richtung während eines Abschnittes der Zeitperiode zu drehen, wodurch eine Änderung der Vibrationsposition des Gyroskops gemäß eines ersten Geschwindigkeitsprofils aus der ersten geometrischen Vibrationsposition in eine zweite geometrische Vibrationsposition hervorgerufen wird; und
      ◦ um die geometrische Vibrationsposition in eine zweite Richtung, die der ersten Richtung entgegengesetzt ist, während des anderen Abschnittes der Zeitperiode zu drehen, wodurch eine Änderung der Vibrationsposition des Gyroskops gemäß eines zweiten Geschwindigkeitsprofils aus der zweiten geometrischen Vibrationsposition in eine dritte geometrische Vibrationsposition hervorgerufen wird,
      wobei das Steuersignal im Mittel über die Zeitperiode null ist und das erste Geschwindigkeitsprofil und das zweite Geschwindigkeitsprofil eine Geschwindigkeitsänderung der Änderung der geometrischen Vibrationsposition in Abhängigkeit von der Zeit anzeigen; und

   eine Auswerteeinheit (450), die ausgebildet ist, um für jedes der drei vibrierenden Gyroskope ein korrigiertes Signal zu erhalten, das eine Änderung der Werte der geometrischen Vibrationsposition darstellt und erhalten wird durch:

      - Abziehen (409) des Steuersignals vom Messsignal, das von dem vibrierenden Gyroskop geliefert wird; und
      - Berücksichtigen der identifizierten Fehler (410) auf Grundlage eines Vergleiches von den Messungen, die durch das gyroskopische System in Abhängigkeit von der Vibrationsposition geliefert werden, einerseits mit Referenzmessungen andererseits,

   wobei die Messungen, die von dem gyroskopischen System geliefert werden, auf den korrigierten Signalen basieren.

11. Gyroskopisches System nach Anspruch 10, **dadurch gekennzeichnet, dass** die Referenzmessungen von einem externen Messsignal geliefert werden.

12. Gyroskopisches System nach Anspruch 10 oder 11, **dadurch gekennzeichnet, dass** das gyroskopische Navigationssystem ein viertes Gyroskop umfasst, wobei die Referenzmessungen vom dem vierten Gyroskop geliefert werden.

13. Gyroskopisches System nach einem beliebigen der Ansprüche 10 bis 12, **dadurch gekennzeichnet, dass** das gyroskopische Navigationssystem ferner Geschwindigkeitssensoren umfasst, wobei die Referenzmessungen von den Geschwindigkeitssensoren geliefert werden.

14. Gyroskopisches System nach einem beliebigen der Ansprüche 10 bis 13, **dadurch gekennzeichnet, dass** die Identifizierung von Fehlern für jedes der vibrierenden Gyroskope auf Grundlage eines Kalman-Filters bestimmt wird, der als Parameter die Vibrationsposition des vibrierenden Gyroskops, das Steuersignal und die Referenzmessungen hat.

15. Gyroskopisches System nach einem beliebigen der Ansprüche 10 bis 14, **dadurch gekennzeichnet, dass** die Identifizierung von Fehlern für jedes der vibrierenden Gyroskope auf Grundlage eines Kalman-Filters bestimmt wird, der als Parameter die Vibrationsposition des vibrierenden Gyroskops, das Steuersignal und die Messungen, die von dem gyroskopischen System geliefert werden, hat.

16. Gyroskopisches System nach einem Beliebigen der Ansprüche 10 bis 15, umfassend drei vibrierende Gyroskope, die entsprechend eines Trieders angeordnet sind, der eine Winkeldrittelnde aufweist, die entlang einer im Wesentlichen vertikalen Achse ausgerichtet ist.

17. Gyroskopisches System nach einem beliebigen der Ansprüche 10 bis 16, **dadurch gekennzeichnet, dass** das erste Geschwindigkeitsprofil und das zweite Geschwindigkeitsprofil für jedes der vibrierenden Gyroskope des gyroskopischen Systems unterschiedlich sind, so dass die den Messungen der drei Gyroskope zugeordneten Fehler dekorreliert sind.

**Claims**

1. Method for gyroscopic measurements supplied by a gyroscopic navigation system comprising at least three vibrating gyroscopes, each of said gyroscopes vibrating in a first initial geometric position of vibration and supplying a measurement signal; **characterized in that** a periodic control signal is applied to each of said vibrating gyroscopes, over a time period, in order to:

   - rotate (21) the geometric position of vibration in a first direction, during a portion of the time period, according to a first speed profile, causing a change in the position of the vibration of said gyroscope from the first geometric position of vibration to a second geometric position of vibration; and
   - rotate (22) the geometric position of vibration in a second direction opposite the first direction, during the other portion of the time period, according to a second speed profile, causing a change in the position of the vibration of said gyroscope from the second geometric position of vibration to a third geometric position of vibration; said control signal having a zero mean over said time period, and the first and second speed profiles indicating a variation in the speed of the change of geometric position of vibration over time;

   wherein the measurements provided by the gyroscopic system are based on corrected signals, with each of said corrected signals, respectively for each of the vibrating gyroscopes, representing a variation in the geometric position of vibration values and being obtained by:

   - subtracting (23) the control signal from the measurement signal supplied by said vibrating gyroscope; and
   - taking into account errors identified (24) on the basis of comparing measurements supplied by the gyroscopic system as a function of the position of vibration, with reference measurements.

2. Method for gyroscopic measurements according to claim 1, wherein the reference measurements are supplied by an external measurement signal.

3. Method for gyroscopic measurements according to claim 1 or 2, wherein the gyroscopic navigation system comprises a fourth gyroscope, the reference measurements being supplied by said fourth gyroscope.

4. Method for gyroscopic measurements according to any one of claims 1 to 3, wherein the gyroscopic navigation system additionally comprises accelerometers, the reference measurements being provided by measurements of position and/or speed obtained on the basis of measurements provided by said accelerometers.

5. Method for gyroscopic measurements according to any one of the above claims, wherein the error identification is determined, for each of the vibrating gyroscopes, on the basis of a Kalman filter given as parameters the position of vibration of the vibrating gyroscope, the control signal, and the reference measurements.

6. Method for gyroscopic measurements according to any one of the above claims, wherein the gyroscopic system comprises three vibrating gyroscopes positioned in a triad having a trisection oriented on a substantially vertical axis.

7. Method for gyroscopic measurements according to any one of the above claims, wherein the first and second speed profiles are different for each of the vibrating gyroscopes of the gyroscopic system, the differences allowing the errors associated with the measurements from the three gyroscopes to be decorrelated from each other.

**8.** Method for gyroscopic measurement according to any one of the above claims, wherein the measurements supplied by the gyroscopic system correspond to angular velocity values, each angular velocity value resulting from the division of a difference between two values for the geometric position of vibration for the corrected signal, separated by a whole number of time periods, by a time value corresponding to the whole number of time periods.

**9.** Method for gyroscopic measurement according to any one of the above claims, wherein the time period and the first and second speed profiles of the control signal are determined such that each integral of each of the speed profiles is equal to $2\pi/kN$ radians,

where N is a frequency vibration mode of the vibrating gyroscope, and where k is a positive integer determined according to the order of the errors to be corrected.

**10.** Gyroscopic system comprising:

- three vibrating gyroscopes (402), each of said gyroscopes vibrating in a first initial geometric position of vibration and supplying a measurement signal;

**characterized in that** it further comprises:

- a control unit (430) adapted to apply a periodic control signal over a time period, in order to:

  ◦ rotate the geometric position of vibration in a first direction, during a portion of the time period, according to a first speed profile, causing a change in the position of the vibration of said gyroscope from the first geometric position of vibration to a second geometric position of vibration; and
  ◦ rotate the geometric position of vibration in a second direction opposite the first direction, during the other portion of the time period, according to a second speed profile, causing a change in the position of the vibration of said gyroscope from the second geometric position of vibration to a third geometric position of vibration,

  said control signal having a zero mean over said time period, and the first and second speed profiles indicating a variation in the speed of the change in geometric position of vibration over time; and

  a processing unit (450) adapted to obtain, for each of the three vibrating gyroscopes, a corrected signal representing a variation in the geometric position of vibration values and being obtained by:

  - subtracting (409) the control signal from the measurement signal supplied by said vibrating gyroscope; and
  - taking into account errors identified (410) on the basis of comparing measurements supplied by the gyroscopic system as a function of the vibration position, with reference measurements, wherein the measurements supplied by the gyroscopic system are based on the corrected signals.

**11.** Gyroscopic system according to claim 10, wherein the reference measurements are supplied by an external measurement signal.

**12.** Gyroscopic system according to claim 10 or 11, wherein the gyroscopic navigation system comprises a fourth gyroscope, the reference measurements being provided by said fourth gyroscope.

**13.** Gyroscopic system according to any one of claims 10 to 12, wherein the gyroscopic navigation system additionally comprises accelerometers, the reference measurements being supplied by said accelerometers.

**14.** Gyroscopic system according to any one of claims 10 to 13, wherein the error identification is determined, for each of the vibrating gyroscopes, on the basis of a Kalman filter given as parameters the position of vibration of the vibrating gyroscope, the control signal, and the reference measurements as parameters.

**15.** Gyroscopic system according to any one of claims 10 to 14, wherein the error identification is determined, for each of the vibrating gyroscopes, on the basis of a Kalman filter given as parameters the position of vibration of the vibrating gyroscope, the control signal, and the measurements supplied by the gyroscopic system.

**16.** Gyroscopic system according to any one of claims 10 to 15, comprising three vibrating gyroscopes positioned in a triad having a trisection oriented on a substantially vertical axis.

**17.** Gyroscopic system according to any one of claims 10 to 16, wherein the first and second speed profiles are different for each of the vibrating gyroscopes of the gyroscopic system, such that the errors associated with the measurements from the three gyroscopes are decorrelated.

**FIG. 1**

| Signal de commande | 21 |
| Signal de commande | 22 |
| Signal de mesure - Signal de commande | 23 |
| Identification d'erreur | 24 |

**FIG. 2**

Résidu
angulaire

## FIG. 3

Temps

P

## FIG. 5

Z'

X

Y

Z

X'

Y'

FIG. 4

**FIG. 6**

**FIG. 7**

FIG. 8

FIG. 9

FIG. 10

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2755227
- EP 1571417 A

- US 7281426 B

**Littérature non-brevet citée dans la description**

- Type I und Type II micromachined vibratory gyroscopes. **ANDREI M. SHKEL.** IEEE/ION. Institute of Electrical, 2006, 586-593